# FASCICULE DE BREVET EUROPEEN

(11) **EP 2 527 257 B1**
(45) Date de publication et mention de la délivrance du brevet: **16.10.2013**
(21) Numéro de dépôt: 12168017.7
(22) Date de dépôt: 15.05.2012
(51) Int. Cl.: B64F 5/00, B41J 3/407, G05D 1/02, G05B 19/402

(54) **Procédé pour pointer une pluralité d'emplacements prédéterminés à l'intérieur d'une structure, et système de pointage correspondant**
Verfahren zum Anzeigen einer Vielzahl von vorbestimmten Standorten im Innern einer Struktur, und entsprechendes Anzeigesystem
Method for boring a plurality of predetermined locations within a structure, and corresponding boring system.

(30) Priorité: 24.05.2011 FR 1154527
(43) Date de publication de la demande: 28.11.2012
(73) Titulaire: Airbus Opérations SAS, 31060 Toulouse (FR)
(72) Inventeur: LAUDRAIN, Yann-Henri, 44420 LA TURBALLE (FR); LELAY, Marc, 44550 MONTOIR DE BRETAGNE (FR)
(74) Mandataire: Gevers France

(56) Documents cités:
- JP-A- 8 001 552
- JP-A- 55 082 657
- JP-A- 2001 289 638
- JP-A- 2003 039 347
- US-A1- 2002 171 821
- US-A1- 2010 283 195

## Description

La présente invention concerne un procédé pour pointer une pluralité d'emplacements prédéterminés de pièces à l'intérieur d'une structure, notamment d'un tronçon de fuselage d'aéronef, et un système de pointage correspondant.

Lors de l'assemblage d'ensembles de systèmes électromécaniques, par exemple embarqués à bord d'avions civils de transport, un grand nombre d'opérateurs spécialisés interviennent, chacun d'entre eux ayant à réaliser une ou plusieurs tâches prédéfinies.

A titre d'exemple, la fixation de pièces - par exemple des supports mobiles - sur la structure primaire d'un tronçon de fuselage requiert trois types distincts de compétence qui permettent chacun d'effectuer une opération particulière. Ainsi, un opérateur appose manuellement - lors d'une première étape - des marquages sur la structure primaire à des emplacements prédéterminés. Dès lors que les marquages sont effectués, on perce - lors d'une deuxième étape - la structure primaire à l'aide de la pièce à fixer (utilisée comme gabarit) afin de positionner précisément les perçages. On parachève - lors d'une dernière étape - la fixation des pièces sur la structure du fuselage en les vissant, rivetant ou collant aux couples correspondants.

Cependant, parmi les opérations mises en oeuvre lors de la fixation de telles pièces, l'opération de marquage s'avère être la plus longue et la plus fastidieuse. Il s'avère en outre que, lorsqu'un problème de montage se présente, l'opération de marquage est fréquemment à l'origine de ce problème, le marquage réalisé étant approximatif voire incorrect.

Le document US 2002/171821 A1 divulgue un procédé pour pointer une pluralité d'emplacements déterminés à l'intérieur d'un tronçon de fuselage d'aéronef à l'aide d'un ensemble mobile comprenant une tête laser. Ce procédé nécessite toutefois l'installation préalable d'un rail à l'intérieur du fuselage et une calibration de la tête laser.

La présente invention a pour objet de remédier à ces inconvénients et, notamment, de réaliser un marquage fiable d'une structure dans un temps limité.

A cette fin, selon l'invention, le procédé pour pointer une pluralité d'emplacements prédéterminés à l'intérieur d'une structure primaire, notamment d'un tronçon de fuselage d'aéronef, est remarquable en ce que :
A/on forme au moins un ensemble mobile comprenant au moins une caméra, par exemple à haute-définition ;
B/on détermine, à l'intérieur de ladite structure, une pluralité de positions à partir de chacune desquelles ledit ensemble mobile peut atteindre au moins l'un desdits emplacements prédéterminés ;
C/on déplace automatiquement ledit ensemble mobile de position en position de ladite pluralité grâce à un premier processus de reconnaissance d'images effectué par ladite caméra et apte à reconnaître lesdites positions ; et
D/à chacune desdites positions ainsi atteintes par ledit ensemble mobile, on pointe automatiquement au moins l'un desdits emplacements prédéterminés associés à ladite position atteinte grâce à un second processus de reconnaissance d'images effectué par ladite caméra et apte à reconnaître le ou lesdits emplacements associés à chaque position atteinte.

Ainsi, grâce à l'invention, on peut réaliser un pointage automatique, avec ou sans contact, d'emplacements prédéterminés à l'intérieur d'une structure, par exemple d'un tronçon de fuselage d'aéronef, de manière à limiter - voire à supprimer - l'intervention d'opérateurs spécialisés pour ce type d'opération à cette étape d'assemblage. En diminuant l'intervention humaine de certaines tâches lors du montage d'un aéronef, on réduit par exemple le risque d'erreurs de positionnement ou d'absence de pièces, tout en uniformisant le montage de ces pièces au sein d'un même aéronef ou bien encore entre plusieurs aéronefs de même type.

Au cours dudit premier processus de reconnaissance d'images de l'étape C/, on peut effectuer les étapes suivantes :
- on balaye la surface de ladite structure à l'aide de ladite caméra, de manière à obtenir une pluralité d'images de celle-ci ; et
- on compare chacune des images obtenues à des images de référence associées respectivement auxdites positions de ladite pluralité, afin de reconnaître lesdites positions sur lesdites images obtenues.

En outre, au cours dudit second processus de reconnaissance d'images de l'étape D/, on peut effectuer les étapes suivantes :
- on balaye la surface de ladite structure dans un voisinage de ladite position atteinte à l'aide de ladite caméra, de manière à obtenir une pluralité d'images de ladite structure à ladite position atteinte ; et
- on compare chacune des images obtenues à des images de référence associées respectivement à ladite position atteinte, afin de reconnaître au moins l'un desdits emplacements prédéterminés associés sur au moins une desdites images obtenues.

Dans une mise en oeuvre de l'invention, ledit ensemble mobile comprenant en outre un dispositif de marquage (par exemple une buse d'impression à jet d'encre), ce dernier est, lors de l'étape D/, déplacé automatiquement, grâce audit second processus de reconnaissance, pour marquer au moins l'un desdits emplacements prédéterminés reconnus.

Ainsi, on réalise un pointage automatique sous la forme d'un marquage du ou des emplacements prédéterminés à l'intérieur de la structure. Dans le cas particulier du marquage des emplacements de pièces à fixer sur la structure primaire d'un tronçon de fuselage, l'opération de marquage étant réalisée de façon automatique, aucun opérateur spécialisé n'est requis, ce qui diminue de fait les erreurs de marquage des emplacements - et donc de positionnement ultérieur des pièces sur la structure du tronçon fuselage - et homogénéise les marquages sur la structure du tronçon. Dans ce dernier cas, l'intervention humaine lors du montage d'un aéronef est réduite.

Dans une autre mise en oeuvre de l'invention, une pièce ayant été fixée sur ladite structure primaire à au moins un desdits emplacements prédéterminés, ladite étape D/ de pointage automatique est une étape de vérification automatique, à l'aide de ladite caméra et par la mise en oeuvre d'un algorithme de calcul de différences géométriques, que ladite pièce a été correctement positionnée en regard des images de référence sur ladite structure audit emplacement correspondant.

Lors de cette vérification automatique après positionnement et fixation des pièces, on peut émettre un rapport répertoriant la ou les erreurs constatées (erreur de positionnement, erreur d'orientation, absence d'une pièce, endommagements d'une pièce, etc.).

Par ailleurs, la présente invention concerne également un système pour pointer automatiquement une pluralité d'emplacements prédéterminés à l'intérieur d'une structure primaire, notamment d'un tronçon de fuselage d'aéronef, qui est remarquable en ce qu'il comporte :
- au moins un ensemble mobile comprenant au moins une caméra ;
- des moyens pour déplacer automatiquement ledit ensemble mobile de position en position d'une pluralité de positions déterminées à l'intérieur de ladite structure à partir de chacune desquelles ledit ensemble mobile peut atteindre au moins l'un desdits emplacements prédéterminés, grâce à un premier processus de reconnaissance d'images effectué par ladite caméra et apte à reconnaître lesdites positions ; et
- des moyens pour pointer automatiquement, à chacune desdites positions ainsi atteintes par ledit ensemble mobile, au moins l'un desdits emplacements prédéterminés associés à ladite position atteinte grâce à un second processus de reconnaissance d'images effectué par ladite caméra et apte à reconnaître le ou lesdits emplacements associés à chaque position atteinte.

Ainsi, grâce à l'invention, un tel système de pointage peut être autonome et ne nécessiter aucune intervention humaine pour son contrôle.

Dans une forme de réalisation de la présente invention, ledit ensemble mobile comprend également un dispositif de marquage, par exemple une buse d'impression à jet d'encre, pour marquer au moins l'un desdits emplacements prédéterminés et reconnus par ledit second processus de reconnaissance d'images.

Ledit ensemble mobile peut en outre comprendre un palpeur.

De préférence, ledit ensemble mobile est un bras articulé monté sur un châssis mobile.
Les figures du dessin annexé feront bien comprendre comment l'invention peut être réalisée. Sur ces figures, des références identiques désignent des éléments semblables.
La figure 1 montre un schéma synoptique d'un système de pointage conforme à la présente invention.
La figure 2 est une vue schématique d'un exemple de réalisation du système autonome de pointage conforme à l'invention, se déplaçant à l'intérieur d'un tronçon de fuselage.
La figure 3 est un agrandissement schématique de la tête pivotante du système de pointage de la figure 2.
La figure 4 illustre schématiquement le système de pointage automatique de la figure 2 lors d'une opération de marquage sur une structure primaire d'un tronçon de fuselage.

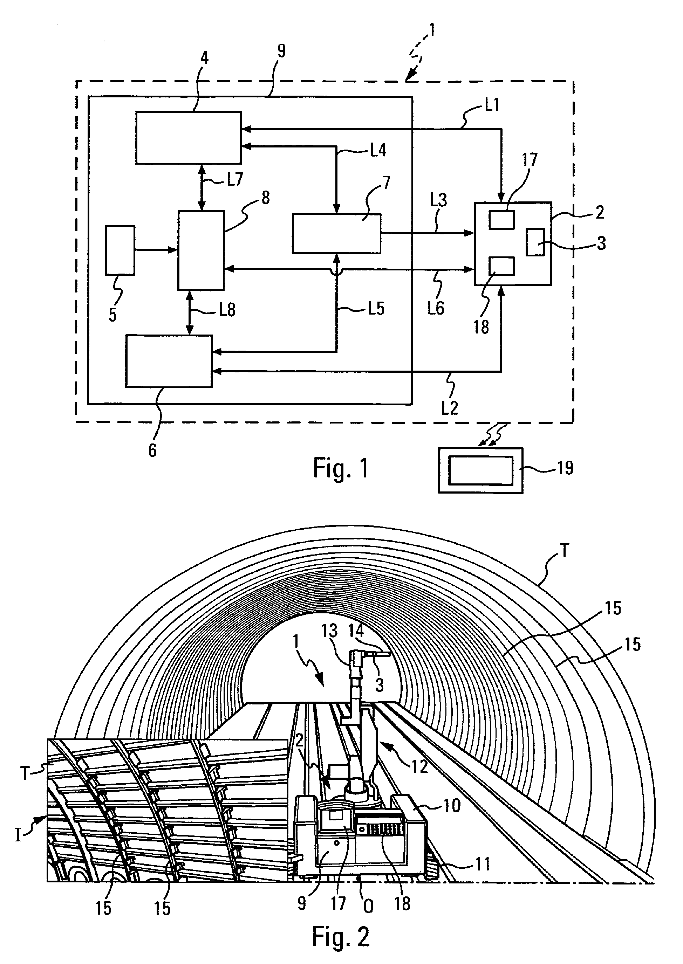

Sur la figure 1, on a représenté, sous la forme d'un schéma synoptique, un système 1 conforme à l'invention pour pointer automatiquement une pluralité d'emplacements prédéterminés à l'intérieur, par exemple, d'un tronçon de fuselage d'aéronef.

Le système de pointage automatique 1 comprend :
- un ensemble mobile 2 comprenant une caméra à haute définition 3. En variante, l'ensemble mobile pourrait comporter plusieurs caméras, de façon à améliorer la précision et la stabilité du pointage automatique ;
- des moyens 4 pour déplacer automatiquement l'ensemble mobile 2 de position en position d'une pluralité de positions déterminées préalablement à l'intérieur du tronçon de fuselage - par exemple sauvegardées dans une mémoire 5 - à partir de chacune desquelles l'ensemble mobile 2 peut atteindre au moins l'un des emplacements prédéterminés, grâce à un premier processus de reconnaissance d'images effectué par la caméra 3 et apte à reconnaître lesdites positions déterminées. Les moyens 4 sont reliés à l'ensemble mobile 2 par l'intermédiaire de la liaison L1 ; et
- des moyens 6 pour pointer automatiquement, à chacune des positions ainsi atteintes par l'ensemble mobile 2, au moins l'un des emplacements prédéterminés associés à la position atteinte grâce à un second processus de reconnaissance d'images effectué par la caméra 3 et apte à reconnaître le ou les emplacements associés à cette position. Les moyens 6 sont reliés à l'ensemble mobile 2 par l'intermédiaire de la liaison L2.

Le système de pointage automatique 1 de l'invention comprend également :
- des moyens 7 pour commander le déplacement et l'activation ou la désactivation de la caméra 3, afin qu'elle puisse balayer, au moins partiellement, l'intérieur du tronçon de fuselage et recueillir une pluralité d'images de celui-ci. Ces moyens 7 sont reliées à l'ensemble mobile 2, aux moyens de déplacement automatique 4 et aux moyens de pointage automatique 6 par l'intermédiaire des liaisons L3, L4 et L5 respectivement ; et
- des moyens 8 pour comparer les images obtenues par la caméra 3 lors d'un balayage, partiel ou intégral, de l'intérieur du tronçon. Après réception de ces images, les moyens 8 sont aptes à comparer les images obtenues à des images de référence, associées respectivement aux positions de la pluralité de positions et sauvegardées, par exemple, dans la mémoire 5. Ces moyens 8 sont reliés à la caméra 3, aux moyens de déplacement automatique 4 et aux moyens de pointage automatique 6 par l'intermédiaire des liaisons L6, L7 et L8 respectivement.

Les moyens de déplacement automatique 4 sont aptes à contrôler les moyens de commande 7 pour réaliser une première reconnaissance d'images permettant de reconnaître les positions de la pluralité de positions sur les images obtenues par la caméra 3 lors d'un balayage de l'intérieur du tronçon. A partir des informations de reconnaissance des positions transmises par les moyens de comparaison 8, les moyens de déplacement 4 déterminent et transmettent des informations de déplacement de l'ensemble mobile 2 aux moyens de commande 7. Ces derniers établissent et communiquent des ordres de commande à des moteurs d'entraînement de l'ensemble mobile 2 (non représentés sur les figures), de manière à déplacer automatiquement ledit ensemble 2 de position en position de la pluralité de positions reconnues. Les moteurs d'entraînement sont également aptes à mettre en mouvement et à orienter ladite caméra 3.

De façon semblable, les moyens de pointage automatique 6 sont aptes à contrôler les moyens de commande 7. Ainsi, à chacune des positions atteintes par l'ensemble mobile 2, les moyens 6 sont aptes à réaliser une seconde reconnaissance d'images pour pointer précisément et automatiquement au moins l'un des emplacements prédéterminés associés à la position atteinte, à partir d'informations de reconnaissance des emplacements de ladite position transmises par les moyens de comparaison 8. Plus précisément, les moyens de pointage automatique 6 élaborent et adressent des informations de déplacement de la caméra 3 aux moyens de commande 7, pour que ces derniers déterminent et communiquent des ordres de commande aux moteurs d'entraînement de l'ensemble mobile 2 pour déplacer automatiquement ladite caméra 3 afin de réaliser le pointage automatiquement.

Les moyens de déplacement automatique 4, les moyens de pointage automatique 6, les moyens de commande 7, les moyens de comparaison 8 et la mémoire 5 sont intégrés dans une unité centrale 9.

L'unité centrale 9 peut être disposée à l'extérieur de l'ensemble mobile ou, en variante, embarquée à bord de celui-ci.

Quelle que soit la disposition de l'unité centrale 9 (embarquée ou non), cette dernière peut communiquer avec l'ensemble mobile 2 grâce à aux liaisons filaires ou sans fil L1, L2, L3 et L6.

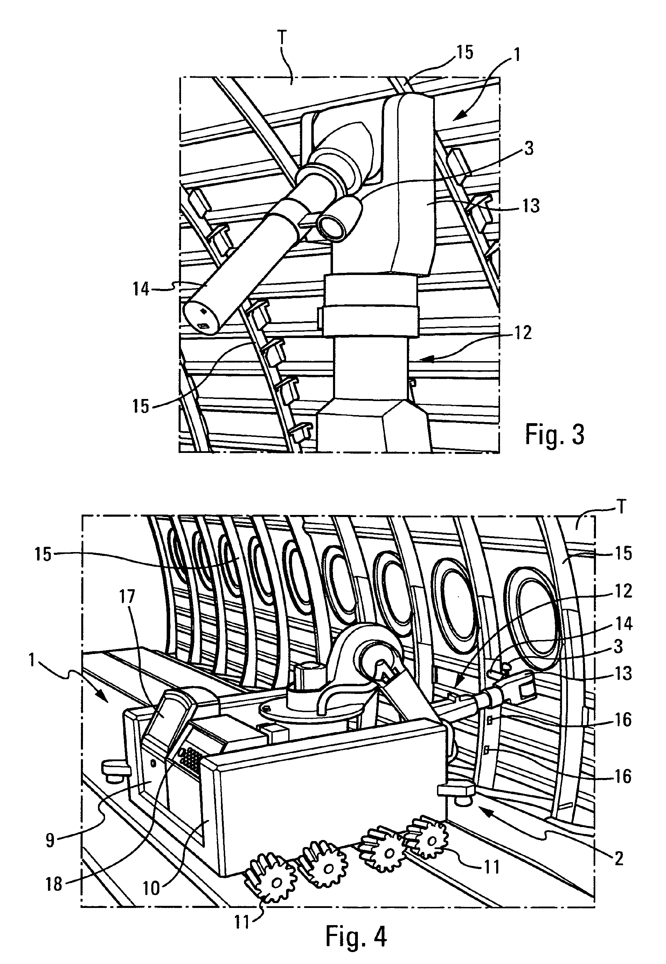

Comme le montre l'exemple de réalisation des figures 2 à 4, le système de pointage automatique 1 est appliqué au marquage d'une pluralité d'emplacements prédéterminés à l'intérieur d'un tronçon T de fuselage d'aéronef.

Dans cet exemple, l'ensemble mobile 2 se présente sous la forme d'un robot comprenant un châssis 10, monté sur des roues 11, sur lequel est fixé, façon rotative, un bras articulé 12.

Le bras articulé 12 comporte, à son extrémité libre, une tête pivotante 13 sur laquelle est montée mobile la caméra 3. Grâce aux différentes articulations du bras 12, la caméra 3 possède six degrés de liberté, ce qui lui permet d'être déplacée et orientée dans toutes les directions envisageables.

La tête pivotante 13 du robot 2 comprend en outre une buse d'impression 14 à jet d'encre sur laquelle la caméra 3 est fixée. La buse d'impression 14 est apte à marquer au moins l'un desdits emplacements prédéterminés et reconnus au cours du second processus de reconnaissance d'images.

Dans cet exemple, l'unité centrale 9 est montée à bord du châssis 10.

Pour marquer les emplacements prédéterminés, par exemple sur les couples 15 du tronçon T, le système de pointage automatique 1, occupant une position d'origine O définie par rapport à l'intérieur du tronçon de fuselage T, met en oeuvre le premier processus de reconnaissance d'images en balayant à l'aide de la caméra 3 l'intérieur dudit tronçon T comme le montre la figure 2. Sur cette figure, la zone I illustre l'image obtenue pour l'orientation de la caméra 3 représentée.

Le premier processus de reconnaissance d'images permet au système de pointage automatique 1 de reconnaître, par un déplacement contrôlé de la caméra 3 par les moyens de déplacement 4, les positions de la pluralité de positions sauvegardées dans la mémoire 5 à partir de chacune desquelles il peut atteindre au moins l'un des emplacements prédéterminés à marquer, puis de se déplacer, de façon autonome, vers chacune desdites positions ainsi reconnues l'une après l'autre. Pour effectuer ces déplacements, les moyens de déplacement 4 de l'unité centrale 9 transmettent des ordres de commande correspondants aux moteurs d'entraînement des roues 11 et du bras articulé 12.

Des moyens de localisation par GPS (pour « Global Positioning System » en anglais), non représentés sur les figures, peuvent être montés sur le système de pointage automatique 1 afin d'affiner le déplacement de celui-ci pour atteindre les positions reconnues.

Lorsqu'il a atteint une des positions reconnues grâce au premier processus de reconnaissance d'images, le système 1 réalise un pointage automatique d'un des emplacements à marquer, associés à ladite position atteinte, par le second processus de reconnaissance d'images. Une fois l'emplacement pointé par la buse d'impression 14 au moyen d'un déplacement du bras articulé 12, celle-ci marque la structure du tronçon de fuselage T en réalisant une empreinte 16.

A titre d'exemple illustratif, lorsque le marquage d'un emplacement forme une étape préliminaire à la fixation d'une pièce (par exemple un support pour des systèmes électriques ou mécaniques), l'empreinte 16 peut représenter les différents contours de la face de la pièce destinée à venir au contact de la structure du tronçon T une fois fixée, ainsi que les éventuelles zones à percer de la structure. L'empreinte 16 peut également contenir des informations propres à la pièce elle-même, comme une référence particulière, un nom prédéfini, etc.

Lorsqu'un des emplacements associés à la position reconnue et atteinte par le système pointage automatique 1 a été marqué, l'opération de marquage est répétée pour l'ensemble des emplacements prédéterminés associés à la position atteinte.

Dès lors que tous les emplacements prédéterminés de la position atteinte ont été marqués, le système de pointage automatique 1 se déplace automatiquement vers la position reconnue suivante grâce au premier processus de reconnaissance d'images, de manière à effectuer le marquage des emplacements prédéterminés associés à cette nouvelle position reconnue atteinte.

Le système de pointage 1 se déplace ainsi automatiquement de position en position de ladite pluralité de positions pour marquer l'ensemble des emplacements correspondants.

Un rapport répertoriant l'ensemble des emplacements marqués peut être transmis par l'unité centrale 9 à une interface homme-machine 17 ou à une imprimante 18, montées sur le châssis 10.

Après marquage des emplacements prédéterminés, un opérateur spécialisé perce la structure du tronçon T aux endroits indiqués par lesdits marquages 16. Un autre opérateur place et fixe ensuite les pièces aux emplacements marqués correspondants.

Lorsque toutes les pièces ont été fixées aux emplacements respectifs, le système de pointage automatique 1 peut réaliser une vérification du positionnement des pièces ainsi fixées.

Pour cela, le système de pointage automatique 1 effectue des opérations semblables à celles décrites précédemment en référence au marquage des emplacements prédéterminés.

En particulier, le système de pointage automatique 1, occupant de nouveau la position d'origine O, met en oeuvre le premier processus de reconnaissance d'images en balayant à l'aide de la caméra 3 l'intérieur dudit tronçon T (figure 2) :
- pour reconnaître, par un déplacement contrôlé de la caméra 3 par les moyens de déplacement 4, les positions de la pluralité de positions sauvegardées dans la mémoire à partir de chacune desquelles il peut atteindre les pièces fixées aux emplacements prédéterminés marqués ; et
- pour se déplacer automatiquement vers chacune desdites positions ainsi reconnues l'une après l'autre.

Lorsqu'il a atteint une des positions reconnues grâce au premier processus de reconnaissance d'images, le système 1 réalise un pointage automatique d'une des pièces fixée à un des emplacements prédéterminés, associé à ladite position atteinte, par le second processus de reconnaissance d'images.

Lorsque le pointage automatique pour vérification a été effectué pour chacune des pièces associées à la position atteinte par le système de pointage automatique 1, celui-ci se déplace automatiquement vers la position reconnue suivante grâce au premier processus de reconnaissance d'images, de manière à effectuer la vérification du positionnement des pièces fixées aux emplacements prédéterminés associés à cette nouvelle position, par exemple, par la mise en oeuvre d'un algorithme de calcul de différences géométriques.

Le système de pointage automatique 1 se déplace ainsi automatiquement de position en position de ladite pluralité de positions pour vérifier que les pièces ont été correctement fixées aux emplacements correspondants.

Un rapport d'erreurs peut être envoyé par l'unité centrale 9 à l'interface homme-machine 17, à l'imprimante 18, à une tablette tactile manipulée 19 par un opérateur spécialisé, ou bien encore à des lunettes électroniques portées par ce dernier.

Dans ce rapport d'erreurs peuvent notamment figurer les emplacements prédéterminés pour lesquels les pièces associées présentent par exemple une erreur ou une absence de positionnement, qu'il est nécessaire de vérifier et, le cas échéant, de corriger.

Il va de soi que, en variante, un système de pointage automatique appliqué à la vérification, distinct d'un système de pointage automatique appliqué au marquage, pourrait être mis en oeuvre pour effectuer uniquement la vérification du positionnement des pièces aux emplacements prédéterminés marqués manuellement ou par le système de pointage automatique appliqué au marquage conforme à l'invention.

Par ailleurs, la présente invention n'est nullement limitée au pointage avec marquage d'un tronçon de fuselage, mais s'applique à toute structure désirée.

## Revendications

1. Procédé pour pointer une pluralité d'emplacements prédéterminés à l'intérieur d'une structure primaire (T), notamment d'un tronçon de fuselage d'aéronef,
**caractérisé en ce que** :
A/on forme au moins un ensemble mobile (2) comprenant au moins une caméra (3) ;
B/ on détermine, à l'intérieur de ladite structure (T), une pluralité de positions à partir de chacune desquelles ledit ensemble mobile (2) peut atteindre au moins l'un desdits emplacements prédéterminés ;
C/on déplace automatiquement ledit ensemble mobile (2) de position en position de ladite pluralité grâce à un premier processus de reconnaissance d'images effectué par ladite caméra (3) et apte à reconnaître lesdites positions ; et
D/à chacune desdites positions ainsi atteintes par ledit ensemble mobile (2), on pointe automatiquement au moins l'un desdits emplacements prédéterminés associés à ladite position atteinte grâce à un second processus de reconnaissance d'images effectué par ladite caméra (3) et apte à reconnaître le ou lesdits emplacements associés à chaque position atteinte.

2. Procédé selon la revendication 1,
**caractérisé en ce que**, au cours dudit premier processus de reconnaissance d'images de l'étape C/, on effectue les étapes suivantes :
- on balaye la surface de ladite structure (T) à l'aide de ladite caméra (3), de manière à obtenir une pluralité d'images de celle-ci ; et
- on compare chacune des images obtenues à des images de référence associées respectivement auxdites positions de ladite pluralité, afin de reconnaître lesdites positions sur lesdites images obtenues.

3. Procédé selon l'une des revendications 1 ou 2,
**caractérisé en ce que**, au cours dudit second processus de reconnaissance d'images de l'étape D/, on effectue les étapes suivantes :
- on balaye la surface de ladite structure dans un voisinage de ladite position atteinte à l'aide de ladite caméra (3), de manière à obtenir une pluralité d'images de ladite structure (T) à ladite position atteinte ; et
- on compare chacune des images obtenues à des images de référence associées respectivement à ladite position atteinte, afin de reconnaître au moins l'un desdits emplacements prédéterminés associés sur au moins une desdites images obtenues.

4. Procédé selon l'une des revendications 1 à 3,
**caractérisé en ce que**, ledit ensemble mobile (2) comprenant en outre un dispositif de marquage (14), ledit dispositif de marquage est, lors de l'étape D/, déplacé automatiquement, grâce audit second processus de reconnaissance, pour marquer au moins l'un desdits emplacements prédéterminés reconnus.

5. Procédé selon l'une des revendications 1 à 4,
**caractérisé en ce que**, une pièce ayant été fixée sur ladite structure (T) à au moins un desdits emplacements prédéterminés, ladite étape D/ de pointage est une étape de vérification automatique, à l'aide de ladite caméra (3) et par la mise en oeuvre d'un algorithme de calcul de différences géométriques, que ladite pièce a été correctement positionnée en regard des images de référence sur ladite structure (T) audit emplacement correspondant.

6. Procédé selon la revendication 5,
**caractérisé en ce que**, après l'étape de vérification, on émet un rapport répertoriant la ou les erreurs constatées.

7. Système pour pointer une pluralité d'emplacements prédéterminés à l'intérieur d'une structure primaire (T), notamment d'un tronçon de fuselage d'aéronef,
**caractérisé en ce qu'**il comporte :
- au moins un ensemble mobile (2) comprenant au moins une caméra (3);
- des moyens (4) pour déplacer automatiquement ledit ensemble mobile (2) de position en position d'une pluralité de positions déterminées à l'intérieur de ladite structure (T) à partir de chacune desquelles ledit ensemble mobile peut atteindre au moins l'un desdits emplacements prédéterminés, grâce à un premier processus de reconnaissance d'images effectué par ladite caméra (3) et apte à reconnaître lesdites positions; et
- des moyens (6) pour pointer automatiquement, à chacune desdites positions ainsi atteintes par ledit ensemble mobile (2), au moins l'un desdits emplacements prédéterminés associés à ladite position atteinte grâce à un second processus de reconnaissance d'images effectué par ladite caméra (3) et apte à reconnaître le ou lesdits emplacements associés à chaque position atteinte.

8. Système selon la revendication 7,
**caractérisé en ce que** ledit ensemble mobile (2) comprend également un dispositif de marquage (14) pour marquer au moins l'un desdits emplacements prédéterminés et reconnus par ledit second processus de reconnaissance d'images.

9. Système selon l'une des revendications 7 ou 8,
**caractérisé en ce que** ledit ensemble mobile (2) comprend en outre un palpeur.

10. Système selon l'une des revendications 7 à 9,
**caractérisé en ce que** ledit dispositif de marquage est une buse d'impression à jet d'encre (14).

11. Système selon l'une des revendications 7 à 10,
**caractérisé en ce que** ledit ensemble mobile (2) est un bras articulé (12) monté sur un châssis mobile (10).

## Patentansprüche

1. Verfahren zum Zeigen auf eine Vielzahl von vorbestimmten Stellen innerhalb einer Primärstruktur (T), insbesondere in einem Teilstück eines Flugzeugrumpfes,
**dadurch gekennzeichnet, dass**:
A) mindestens eine verschiebbare Baugruppe (2) gebildet wird, die mindestens eine Kamera (3) umfasst;
B) innerhalb der Struktur (T) eine Vielzahl von Positionen bestimmt wird, von denen aus die verschiebbare Baugruppe (2) jeweils mindestens eine der vorbestimmten Stellen erreichen kann;
C) die verschiebbare Baugruppe (2) anhand eines ersten Bilderkennungsprozesses, der von der Kamera (3) ausgeführt wird und in der Lage ist, die Positionen zu erkennen, von einer Position zur anderen der Vielzahl von Positionen bewegt wird; und
D) an jeder der Positionen, die somit durch die verschiebbare Baugruppe (2) erreicht werden, automatisch auf mindestens eine der vorbestimmten Stellen gezeigt wird, die mit der Position verknüpft sind, die dank eines zweiten Bilderkennungsprozesses erreicht wird, der von der Kamera (3) ausgeführt wird und dazu geeignet ist, um die Stelle(n) zu erkennen, die mit jeder erreichten Position verknüpft ist bzw. sind.

2. Verfahren nach Anspruch 1, **dadurch gekennzeichnet, dass** während des ersten Bilderkennungsprozesses aus Schritt C) die folgenden Schritte ausgeführt werden:
- Absuchen der Oberfläche der Struktur (T) anhand der Kamera (3), um eine Vielzahl von Bildern derselben zu erzielen; und
- Vergleichen jedes der erzielten Bilder mit Referenzbildern, die jeweils mit den Positionen der Vielzahl verknüpft sind, um die Positionen auf den erzielten Bildern zu erkennen.

3. Verfahren nach einem der Ansprüche 1 oder 2, **dadurch gekennzeichnet, dass** während des zweiten Bilderkennungsprozesses aus Schritt D) die folgenden Schritte ausgeführt werden:
- Absuchen der Oberfläche der Struktur in der Nähe der Position, die anhand der Kamera (3) erreicht wird, um eine Vielzahl von Bildern der Struktur (T) an der erreichten Position zu erzielen; und
- Vergleichen jedes der erzielten Bilder mit Referenzbildern, die jeweils mit der erreichten Position verknüpft sind, um mindestens eine der verknüpften vorbestimmten Stellen auf mindestens einem der erzielten Bilder zu erkennen.

4. Verfahren nach einem der Ansprüche 1 bis 3, **dadurch gekennzeichnet, dass**, da die verschiebbare Baugruppe (2) ferner eine Markierungsvorrichtung (14) umfasst, die Markierungsvorrichtung in Schritt D) dank des zweiten Erkennungsprozesses automatisch bewegt wird, um mindestens eine der erkannten vorbestimmten Stellen zu markieren.

5. Verfahren nach einem der Ansprüche 1 bis 4, **dadurch gekennzeichnet, dass**, da ein Teil an der Struktur (T) an mindestens einer der vorbestimmten Stellen befestigt wurde, der Schritt D) des Zeigens ein Schritt des automatischen Überprüfens anhand der Kamera (3) und durch das Einsetzen eines Algorithmus zum Berechnen geometrischer Differenzen, dass das Teil gegenüber Referenzbildern an der Struktur (T) an der entsprechenden Stelle richtig positioniert wurde, ist.

6. Verfahren nach Anspruch 5, **dadurch gekennzeichnet, dass** nach dem Schritt des Überprüfens ein Bericht ausgestellt wird, der den oder die festgestellten Fehler erfasst.

7. System zum Zeigen auf eine Vielzahl von vorbestimmten Stellen innerhalb einer Primärstruktur (T), insbesondere in einem Teilstück eines Flugzeugrumpfes, **dadurch gekennzeichnet, dass** es Folgendes umfasst:
- mindestens eine verschiebbare Baugruppe (2), die mindestens eine Kamera (3) umfasst;
- Mittel (4) zum automatischen Bewegen der verschiebbaren Baugruppe (2) von einer Position zur anderen von einer Vielzahl von bestimmten Positionen innerhalb der Struktur (T), von denen aus die verschiebbare Baugruppe jeweils mindestens eine der vorbestimmten Stellen erreichen kann, dank eines ersten Bilderkennungsprozesses, der von der Kamera (3) ausgeführt wird und dazu geeignet ist, die Positionen zu erkennen; und
- Mittel (6) zum automatischen Zeigen an jeder der Positionen, die somit durch die verschiebbare Baugruppe (2) erreicht werden, auf mindestens eine der vorbestimmten Stellen, die mit der Position verknüpft sind, die dank eines zweiten Bilderkennungsprozesses erreicht wird, der von der Kamera (3) ausgeführt wird und in der Lage ist, die Stelle(n) zu erkennen, die mit jeder erreichten Position verknüpft ist bzw. sind.

8. System nach Anspruch 7, **dadurch gekennzeichnet, dass** die verschiebbare Baugruppe (2) auch eine Markierungsvorrichtung (14) umfasst, um mindestens eine der vorbestimmten Stellen zu markieren, die durch den zweiten Bilderkennungsprozess erkannt werden.

9. System nach einem der Ansprüche 7 oder 8, **dadurch gekennzeichnet, dass** die verschiebbare Baugruppe (2) ferner einen Fühler umfasst.

10. System nach einem der Ansprüche 7 bis 9, **dadurch gekennzeichnet, dass** die Markierungsvorrichtung eine Tintenstrahldüse (14) ist.

11. System nach einem der Ansprüche 7 bis 10, **dadurch gekennzeichnet, dass** die verschiebbare Baugruppe (2) ein Gelenkarm (12) ist, der auf einem verschiebbaren Fahrgestell (10) montiert ist.

## Claims

1. A method for pointing a plurality of predetermined locations inside a primary structure (T), for example of an aircraft fuselage portion, **characterized in that**:
A/ at least one mobile assembly (2) is formed, comprising at least one video camera (3);
B/ inside said structure (T), a plurality of positions are determined, from each of which said mobile assembly (2) can reach at least one of said predetermined locations;
C/ said mobile assembly (2) is automatically moved from a position to another position of said plurality thanks to a first image recognition process performed by said video camera (3) and able to recognize said positions; and
D/ at each of said positions thus reached by said mobile assembly (2), at least one of said predetermined locations associated with said position being reached is pointed automatically thanks to a second image recognition process performed by said video camera (3) and able to recognize said location(s) associated with each position being reached.

2. The method according to claim 1,
**characterized in that**, upon said first image recognition process of step C/, the following steps are carried out:
- the surface of said structure (T) is swept with the help of said video camera (3) so as to obtain a plurality of images of the latter; and
- each one of the images obtained is compared to reference images associated respectively with said positions of said plurality, so as to recognize said positions on said images being obtained.

3. The method according to one of claims 1 and 2,
**characterized in that**, during said second image recognition process of step D/, the following steps are performed:
- the surface of said structure is swept in the vicinity of said position reached with the help of said video camera (3) so as to obtain a plurality of images of said structure (T) on said position being reached; and
- each one of the images obtained is compared to reference images associated respectively with said position being reached so as to recognize at least one of said predetermined locations associated on at least one of said images being obtained.

4. The method according to one of claims 1 to 3,
**characterized in that** said mobile assembly (2) comprising further a marking device (14), said marking device is, upon step D/, automatically moved, thanks to said second recognition process, for marking at least one of said predetermined locations being recognized.

5. The method according to one of claims 1 to 4,
**characterized in that**, a part having been fastened on said primary structure (T) to at least one of said predetermined locations, said automatic pointing step D/ is a step for an automatic checking, with the help of said video camera (3) and by implementation of a calculation algorithm for geometrical differences, that said part has been correctly positioned opposite the reference images on said structure (T) to said corresponding location.

6. The method according to claim 5,
**characterized in that**, after the checking step, a report listing the error(s) being found is emitted.

7. A system for automatically pointing a plurality of predetermined locations inside a primary structure (T), for example of an aircraft fuselage portion,
**characterized in that** it comprises:
- at least, one mobile assembly (2) comprising at least one video camera (3);
- means (4) for moving automatically said mobile assembly (2) from a position to another one in a plurality of determined position inside said structure (T) from each of which said mobile assembly can reach at least one of said predetermined locations thanks to a first image recognition process performed by said video camera (3) and able to recognize said positions; and
- means (6) for automatically pointing, on each of said positions reached by said mobile assembly (2), at least one of said predetermined locations associated with said position reached thanks to a second image recognition process performed by said video camera (3) and able to recognize the location(s) associated with each position being reached.

8. The system according to claim 7,
**characterized in that** said mobile assembly (2) also comprises a marking device (14), so as to mark at least one of said predetermined locations and recognized by said second image recognition process.

9. The system according to one of claims 7 and 8,
**characterized in that** said mobile assembly (2) further comprises a sensor.

10. The system according to one of claims 7 to 9,
**characterized in that** said marking device is an inkjet printing nozzle (14).

11. The system according to one of claims 7 to 10,
**characterized in that** said mobile assembly (2) is a jointed arm (12) mounted on a mobile frame (10).
